(19) **Europäisches Patentamt / European Patent Office / Office européen des brevets**

(11) **EP 3 137 879 B1**

(12) **FASCICULE DE BREVET EUROPEEN**

(45) Date de publication et mention de la délivrance du brevet:
**05.06.2024  Bulletin 2024/23**

(21) Numéro de dépôt: **15720317.5**

(22) Date de dépôt: **28.04.2015**

(51) Classification Internationale des Brevets (IPC):
**G01N 21/64** *(2006.01)*     **B01L 3/00** *(2006.01)*

(52) Classification Coopérative des Brevets (CPC):
**B01L 3/5027; G01N 21/6428; G01N 21/6456;**
B01L 2300/0851; B01L 2300/168; B01L 2400/086;
G01N 21/6458

(86) Numéro de dépôt international:
**PCT/EP2015/059131**

(87) Numéro de publication internationale:
**WO 2015/165867 (05.11.2015 Gazette 2015/44)**

(54) **DISPOSITIF ET PROCEDE D'ANALYSE D'ANALYTE(S) D'UN FLUIDE**

VORRICHTUNG UND METHODE ZUR ANALYSE EINES ODER MEHRERER ANALYTEN AUS EINER FLÜSSIGKEIT

DEVICE AND METHOD FOR ANALYZING ANALYTE(S) FROM A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2014  FR 1453823**

(43) Date de publication de la demande:
**08.03.2017  Bulletin 2017/10**

(73) Titulaire: **Commissariat à l'Energie Atomique et aux Energies Alternatives**
**75015 Paris (FR)**

(72) Inventeurs:
 • **POUTEAU, Patrick**
   **38240 Meylan (FR)**
 • **BELLEMIN COMTE, Amélie**
   **3834 Voreppe (FR)**
 • **FONTELAYE, Caroline**
   **38500 Voiron (FR)**
 • **PERRAUT, François**
   **38134 Saint Joseph de Rivière (FR)**

(74) Mandataire: **Lavoix**
   **2, place d'Estienne d'Orves**
   **75441 Paris Cedex 09 (FR)**

(56) Documents cités:
| | |
|---|---|
| EP-A1- 2 803 410 | WO-A2-2012/094642 |
| US-A1- 2010 111 762 | US-A1- 2010 204 057 |
| US-A1- 2014 045 209 | US-A1- 2014 099 732 |

**EP 3 137 879 B1**

**Description**

La présente invention concerne un dispositif d'analyse d'un fluide et un procédé d'analyse par un tel dispositif d'un fluide comportant au moins un analyte.

Dans divers domaines, il est utile de pouvoir détecter et quantifier avec une bonne précision les analytes présents dans un fluide. A titre d'exemple, la connaissance de la quantité de polluant, tel que des métaux lourds, dans un fluide permet de connaitre l'état de pollution du fluide. Selon une autre application, il est intéressant d'étudier des analytes d'intérêt biologique, tel qu'un anticorps ou de l'acide désoxyribonucléique (plus souvent désigné sous l'acronyme ADN).

L'ADN est une molécule ayant un intérêt biologique particulier puisque l'ADN est présente dans toutes les cellules vivantes, et renferme l'ensemble des informations permettant le développement et le fonctionnement d'un organisme.

Il est donc souhaitable de pouvoir détecter et quantifier avec une bonne précision les analytes dans un fluide.

Pour cela, il est connu de capter un analyte sur une surface de capture d'un dispositif et d'effectuer une mesure optique sur ladite surface de capture. Généralement, la mesure optique est mise en oeuvre en dirigeant un faisceau lumineux sur la surface de capture et un signal optique émis par ladite surface est détecté ou collecté. Une propriété optique du signal collecté évolue en fonction de la quantité d'analyte captée sur la surface de capture. A titre d'exemple, pour des analytes marqués par un marqueur fluorescent, le signal collecté est un signal de fluorescence dont l'intensité dépend de la quantité d'analyte captée sur la surface de capture.

Toutefois, dans la plupart des dispositifs connus, la sensibilité de détection de l'analyte est insuffisante.

Dans le cas particulier de l'ADN, il est connu d'utiliser des puces à ADN pour détecter les brins d'ADN présents dans un fluide biologique. Une puce à ADN, aussi appelée micromatrice d'ADN, est un ensemble de molécules d'ADN fixées en rangées et ordonnées sur une petite surface. La petite surface est, selon les cas, du verre, du silicium ou du plastique. Chaque molécule d'ADN est adaptée à capturer les nucléotides complémentaires appartenant à une molécule d'ADN à étudier. La détection de la quantité de nucléotides capturés par les différentes molécules d'ADN est mise en oeuvre en utilisant des techniques de fluorescence. Cela permet d'obtenir une estimation de la quantité d'un nucléotide particulier contenu dans le fluide biologique étudié.

Toutefois, l'estimation de la quantité n'est possible que dans le cas où un nucléotide est détecté. De ce fait, pour des puces ADN ayant un seuil de sensibilité détection trop élevé, la quantité de nucléotide ne peut être estimée.

Il est également connu des dispositifs d'analyse des documents WO 2012/094642 A2, US 2014/099732 A2, EP 2 803 410 A, US 2010/204057 A1, US 2010/111762 et US 2014/045209 A1.

Il existe donc un besoin pour un dispositif d'analyse d'au moins un analyte d'un fluide présentant une sensibilité de détection améliorée.

A cet effet, l'invention a pour objet un dispositif d'analyse d'au moins un analyte d'un fluide selon la revendication 1.

Suivant des modes de réalisation particulier, le dispositif d'analyse comprend une ou plusieurs des caractéristiques des revendications 2 à 8, prise(s) isolément ou suivant toutes les combinaisons techniquement possibles.

L'invention se rapporte aussi à un procédé d'analyse d'un fluide comprenant au moins un analyte par un dispositif d'analyse tel que décrit précédemment, dans lequel chaque pilier comprend une extrémité libre et une extrémité fixée à la paroi. Le procédé d'analyse comprend une étape d'injection du fluide analysé dans la chambre, une étape d'illumination de la paroi pour injecter de la lumière dans chaque pilier au niveau de l'extrémité fixée à la paroi du pilier considéré, et une étape de collection de la lumière guidée par chaque pilier vers l'extrémité libre du pilier considéré.

D'autres caractéristiques et avantages de l'invention apparaîtront à la lecture de la description qui suit de modes de réalisation de l'invention, donnés à titre d'exemple uniquement et en référence aux dessins qui sont :

-    figure 1, une vue schématique en vue de dessus d'un exemple de dispositif d'analyse ;
-    figure 2, une vue schématique en section du dispositif selon la figure 1 selon l'axe II-II indiqué sur la figure 1 ;
-    figure 3, une vue schématique partielle en section d'un autre exemple de dispositif d'analyse ;
-    figure 4, une vue schématique d'une figure de fluorescence obtenu utilisant un dispositif d'analyse similaire au dispositif d'analyse de la figure 3, et
-    figure 5, une vue schématique d'une figure de fluorescence obtenu en utilisant un autre exemple du dispositif d'analyse.

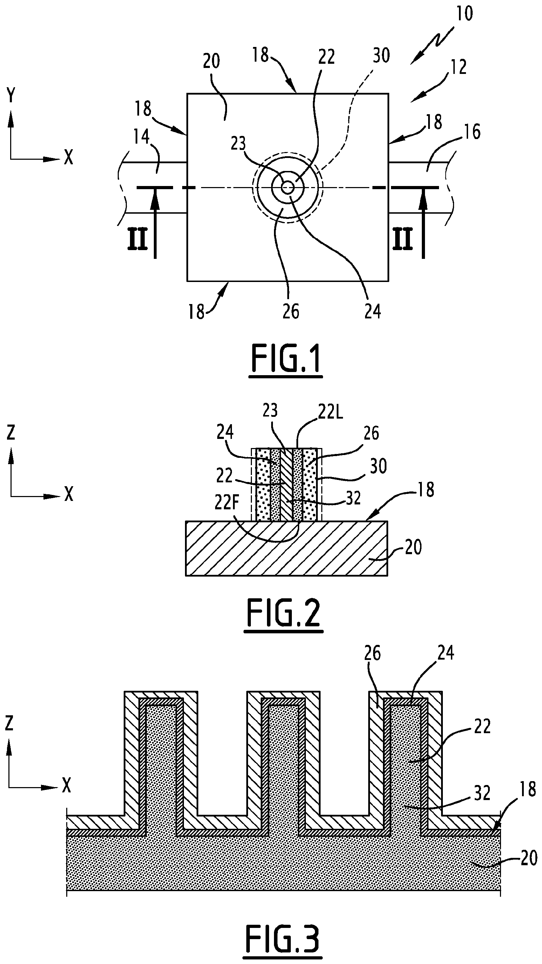

Il est proposé un dispositif d'analyse 10 d'au moins un analyte d'un fluide tel que visible notamment à la figure 1. Dans la suite de la description, le dispositif d'analyse est dénommé dispositif 10.

Le dispositif 10 est propre à permettre l'analyse d'analyte(s) dans un fluide. Notamment, le dispositif 10 est propre à détecter la présence d'un ou plusieurs analytes et à quantifier une telle présence dans le fluide.

L'analyte est, par exemple, un polluant, tel qu'un métal lourd, un analyte d'intérêt biologique ou toute autre molécule chimique. Un métal lourd est un exemple de polluant. Un anticorps ou un acide nucléique, notamment de l'ADN, une cellule, une protéine sont des exemples d'analytes d'intérêt biologique.

Par définition, un fluide est un milieu matériel parfaitement déformable. Sont notamment regroupés sous une telle appellation les gaz qui sont l'exemple des fluides compressibles, et les liquides, qui illustrent les fluides peu compressibles. Dans la suite de la description, à titre d'exemple, il est considéré que le fluide du dispositif 10 est un milieu aqueux. L'indice optique du fluide est généralement inférieur à 1. Dans le cas particulier de l'eau, l'indice optique est de 1,33 environ.

Le dispositif 10 comprend une chambre 12 d'analyse, une entrée 14 d'injection de fluide à analyser dans la chambre 12 et une sortie 16 de fluide analysé par la chambre 12.

Il est alors possible de définir un sens de circulation du fluide dans le dispositif 10 depuis l'entrée 14 d'injection vers la sortie 16 de fluide. Le sens de circulation correspond à une direction de circulation notée X sur la figure 1.

La chambre 12 comprend au moins une paroi 18 délimitant un espace intérieur de circulation de fluide dans la chambre 12 et un support 20 délimité par la paroi 18.

A titre d'exemple, l'espace intérieur est un cube. En variante, l'espace intérieur de la chambre 12 présente une forme différente. Par exemple, la forme de l'espace intérieur est parallélépipédique.

Dans le cas de la figure 1, le support 20 est planaire. Le plan associé au support 20 permet de définir une direction transversale Y perpendiculaire à la direction de circulation X. Autrement formulé, le support 20 s'étend à la fois selon la direction de circulation X et selon la direction transversale Y.

La chambre 12 comporte également un pilier 22 s'étendant depuis la paroi 18 du support 20. Un pilier 22 est un élément allongé le long d'une direction, dite direction verticale Z, perpendiculaire à la direction de circulation X et à la direction transversale Y.

Par l'expression « le pilier 22 s'étend depuis la paroi 18 du support 20 », il est entendu que le pilier 22 comprend une extrémité libre 22L et une extrémité 22F fixée à la paroi 18 du support 20, le pilier 22 s'étendant entre l'extrémité libre 22L et l'extrémité 22F fixée à la paroi 18.

Du fait de la présence du pilier 22, un tel dispositif 10 est parfois qualifié de chambre fluidique à pilier(s).

Le pilier 22 comporte une âme 23, une couche externe 24, disposée autour de ladite âme et une couche de revêtement 26 de la couche externe 24.

L'âme 23 forme une protubérance par rapport au support 20.

L'âme 23 forme une couche qui sera notée couche support 32 dans la suite de la description.

La couche support 32 présente un premier indice optique noté n32.

L'indice optique d'une couche est défini comme l'indice réfraction moyen de la couche considérée. Par exemple, une moyenne spatiale sur la valeur de l'indice de réfraction en chaque point de la couche est réalisée pour obtenir l'indice optique de la couche considérée.

De préférence, le matériau de l'âme 23, est le même que celui du support 20.

La couche externe 24 du pilier 22 est la couche délimitant la surface externe de l'âme 23. Ainsi, selon l'exemple de la figure 2, la couche externe 24 présente une surface interne en contact avec la surface externe de la couche support 32.

La couche externe 24 présente un deuxième indice optique noté n24.

Le deuxième indice optique n24 de la couche externe 24 du pilier 22 est strictement supérieur au premier indice optique n32 de la couche support 32 du pilier 22. Cela s'écrit mathématiquement :

$$n24 > n32$$

Avantageusement, la couche externe 24 du pilier 22 présente une épaisseur comprise entre 50 nanomètres et 1 micron, de préférence comprise entre 100 nanomètres et 300 nanomètres.

La couche externe 24 présente aussi une surface externe. La surface externe est en contact avec la couche de revêtement 26, et plus précisément la surface interne de la couche de revêtement 26.

Par l'expression « couche de revêtement », il est entendu une couche positionnée sur la couche externe 24 au moins en partie. La couche de revêtement peut notamment enveloppée la couche externe 24.

La couche de revêtement 26 est une couche de capture 26. Il est entendu par l'expression de « couche de capture » que la couche de capture 26 est une couche fonctionnalisée apte à capturer au moins un analyte du fluide.

Une telle capture a lieu dans une zone à proximité de la couche de capture appelée dans la suite « zone de capture ». Un analyte passant dans la zone de capture 30 est capturé par la couche de capture 26. La zone de capture 30 est délimitée d'une part par la surface externe de la couche de capture 26 et d'autre part par une ligne de pointillés sur les figures 1 et 2.

Selon l'exemple de la figure 1, la zone de capture 30 a une forme annulaire cylindrique.

La couche de capture 26 présente un troisième indice optique n26.

Avantageusement, le troisième indice optique n26 de la couche de capture 26 du pilier 22 est strictement inférieur au deuxième indice optique n24 de la couche externe 24 du pilier 22. Cela s'écrit mathématiquement :

$$n24 > n26$$

Le fonctionnement du dispositif 10 est décrit par référence à un procédé d'analyse du fluide comprenant au moins un analyte.

Le procédé d'analyse comprend une étape d'injection par l'entrée 14 du fluide à analyser dans la chambre 12. L'étape d'injection est mise en oeuvre en vidant le contenu d'une pipette sur l'entrée 14.

Le fluide comprenant au moins un analyte circule alors dans la chambre 12. Lorsqu'un ou plusieurs analytes passent dans la zone de capture 30 de la couche de capture 26, chaque analyte est capturé par la zone de capture 30 de la couche de capture 26.

De préférence, le deuxième indice optique n24 de la couche externe 24 est supérieur à l'indice optique du fluide. Ainsi, de préférence, le deuxième indice optique n24 de la couche externe 24 est de préférence supérieur à 1, voire supérieure à 1,5 ou 2. Plus cet indice est élevé, plus la couche externe 24 assure une fonction de guide d'onde, comme détaillé ci-après.

Le procédé d'analyse comporte également une étape d'introduction de fluorophores dans la chambre 12, le fluorophore étant spécifique de l'analyte d'intérêtDe préférence, l'analyte est préalablement marqué par un marqueur fluorescent le fluorophore étant alors introduit avec l'analyte..

Le procédé comporte alors une étape d'illumination de la paroi 18 du support 20 pour injecter de la lumière dans le pilier 22, par exemple au niveau de son extrémité 22F fixée au support 20. Une telle étape d'illumination est mise en oeuvre par utilisation d'une source de lumière propre à illuminer la paroi 18 du support 20. L'illumination peut être émise selon toute autre direction, mais une illumination parallèle à la direction selon laquelle s'étendent les piliers est préférée.

La lumière injectée à l'étape d'illumination excite les fluorophores présents sur les analyses capturées depuis un état fondamental vers un état excité. Lors de la désexcitation vers l'état fondamental, les fluorophores émettent de la lumière par émission spontanée, la lumière émise étant appelée « lumière de fluorescence ».

La lumière de fluorescence est guidée dans la couche externe 24 du pilier 22. En effet, le deuxième indice n26 de la couche externe 24 de chaque pilier 22 est supérieur au premier indice optique n32 de la couche support 32 du pilier 22. De ce fait, le guidage de la lumière correspondant à la fluorescence du ou des analytes capturés se fait dans la couche de capture 26.

Cet effet de guidage est renforcé par le fait que le troisième indice optique n26 de la couche de capture 26 du pilier 22 est de préférence strictement inférieur au deuxième indice optique n24 de la couche externe 24 du pilier 22. Si tel n'est pas le cas, l'effet de guidage est renforcé par le fait que le troisième indice optique n26 est supérieur à l'indice optique du fluide, et notamment supérieur à 1, voire 1,5, voire 2.

La majeure partie des photons guidés sort du guide formé par la couche externe 24 comprise entre la couche de capture 26 et la couche support 32 au niveau de l'extrémité libre 22L du pilier 22.

Le procédé comporte alors une étape de collection de la lumière de fluorescence guidée dans la couche externe 24 du pilier 22 vers l'extrémité libre 22L du pilier 22. Pour cela, il est utilisé un capteur de lumière dont la surface sensible est par exemple disposée sensiblement parallèlement au support 20, en face de ladite extrémité libre 22L..

Par conséquent, la lumière de fluorescence produite par un pilier 22 est collectée sur un nombre limité de pixels autour de l'image du pilier 22. De ce fait, le signal détecté par le capteur présente une intensité accrue.

Le procédé d'analyse permet donc d'obtenir un signal de fluorescence du ou des analytes du fluide de plus grande intensité. Le rapport signal à bruit est donc augmenté. De ce fait, la sensibilité de la mesure est accrue : le dispositif permet une détection d'une concentration d'analyte plus faible que sans la couche externe 24.

Outre le fait d'obtenir un seuil de détection encore plus faible, le dispositif selon l'invention permet une détermination plus précise de la quantité d'analyte présent dans le fluide analysé par le dispositif 10.

Dans l'exemple de la figure 1, le pilier 22 présente une dimension selon la direction verticale Z perpendiculaire à la paroi 18 du support 20 comprise entre 20 microns et 5 millimètres.

Du fait d'une telle dimension relativement réduite, le dispositif 10 est également appelé « microchambre fluidique à pilier(s) ».

Avantageusement, la couche de capture 26 du pilier 22 présente une épaisseur comprise entre 50 nanomètres et 100 nanomètres.

L'épaisseur de la couche de capture 26 est définie comme la distance entre la surface externe de la couche de capture 26 et la surface interne de la couche de capture 26 en contact avec la surface externe de la couche externe 24.

En outre, le pilier 22 présente la forme d'un cylindre présentant une base, la base étant de préférence un disque dont le diamètre est compris entre 1 micron et 10 microns.

Le support 20 et le pilier 22 sont réalisés dans le même matériau, ce qui facilite la réalisation de la chambre 12.

Pour améliorer la capture du ou des analytes du fluide circulant dans l'espace de circulation, le dispositif 10 comprend une pluralité de piliers 22, chaque pilier 22 s'étendant depuis la paroi 18 du support 20 le long d'une direction. Les directions de chaque pilier 22 sont parallèles entre elles. La direction choisie est usuellement la direction perpendiculaire à la paroi 18 du support 20, c'est-à-dire la direction verticale Z.

Un tel dispositif 10 comprenant plusieurs piliers 22 est illustré en référence à la figure 3. Le dispositif 10 présente les mêmes éléments que le dispositif 10 de la figure 1, sauf qu'au lieu d'un unique pilier 22, le dispositif 10 comporte une pluralité de piliers 22. Sur la section de la figure 3, pour simplifier, seuls trois piliers 22 sont représentés.

Les piliers 22 sont organisés selon des rangées de piliers 22. Chaque rangée est en quinconce par rapport à la rangée précédente et la rangée qui suit.

Dans l'exemple de la figure 3, la couche externe 24 de chaque pilier 22 est reliée à la couche 24 du pilier 22 précédent et du pilier 22 qui suit.

Similairement, la couche de capture 26 de chaque pilier 22 est reliée à la couche 26 du pilier 22 précédent de la même rangée et du pilier 22 suivant de la même rangée.

Autrement formulé, la couche externe 24 s'étend sur tous les piliers et sur toute la zone inter-pilier. Cela permet de réaliser relativement aisément le dispositif 10, par des techniques de dépôt conforme connues.

La même remarque s'applique pour la couche externe 26.

Dans l'exemple de la figure 3, le support 20 est réalisé en silicium.

La couche support 32 de chaque pilier 22 est réalisée dans le même matériau que le support 20, par exemple du silicium.

Chaque couche externe 24 est en oxyde de silicium et présente une épaisseur de 1 micron.

Chaque couche externe 24 présente un deuxième indice optique n24 de 1,6.

Dans l'exemple de la figure 1, chaque couche de capture 26 est une couche d'oxynitrure de silicium (de formule chimique $Si_2N_2O$) fonctionnalisée recouvrant la couche externe 24 de chaque pilier 22.

Chaque couche de capture 26 résulte avantageusement d'un procédé comprenant le dépôt chimique en phase vapeur assisté par plasma (ou PECVD, pour plasma-enhanced chemical vapor déposition en anglais) visant à obtenir une couche de 1 micron d'épaisseur, puis la fonctionnalisation de la couche obtenue pour obtenir une couche fonctionnalisée.

La couche de capture 26 fonctionnalisée comprend en surface au moins un groupe chimique ou une fonction chimique susceptible de réagir avec l'analyte à capturer.

Des méthodes de fonctionnalisation de surface de matériau et notamment d'oxynitrure de silicium sont connues de la littérature.

La nature du groupe chimique ou de la fonction chimique de la couche de capture 26 introduit lors de la fonctionnalisation dépend de la nature de l'analyte à analyser. Par exemple, lorsque l'analyte est un métal lourd, le groupe chimique introduit lors de la fonctionnalisation comprend une molécule extractante, de type kylonéine ou calyxarène couronne.

Dans un autre exemple, lorsque l'analyte comprend une fonction amine, ce qui est le cas de nombreux analytes d'intérêt biologique, notamment des anticorps et des acides nucléiques, la fonction chimique est une fonction aldéïde. Une fonction aldéïde est susceptible de réagir avec la fonction amine de l'analyte par formation d'une liaison imine.

A titre illustratif, pour préparer une couche de capture 26 en oxynitrure de silicium fonctionnalisée, il est mis en oeuvre un procédé comprenant les étapes de dépôt chimique, de transformation des fonctions $SiO_2$ et de réaction.

L'étape de dépôt chimique est une étape de dépôt chimique en phase vapeur assistée par plasma d'une couche en oxynitrure de silicium sur la couche externe 24.

L'étape de transformation des fonctions $SiO_2$ est une étape de transformation des fonctions $SiO_2$ présentes en surface de la couche en oxynitrure de silicium obtenues à l'issue de la mise en oeuvre de l'étape de dépôt chimique. Il s'agit de transformer les fonctions $SiO_2$ en fonction Si-OH.

L'étape de réaction consiste à faire réagir des fonctions Si-OH obtenues à l'issue de l'étape de transformation avec un composé porteur d'une fonction susceptible de réagir avec une fonction Si-OH et porteur d'au moins un groupe ou une fonction chimique susceptible de réagir avec l'analyte.

L'étape de transformation est par exemple réalisée par traitement de la couche en oxynitrure de silicium obtenue à l'étape de dépôt chimique avec le réactif de Brown ou par activation plasma $O_2$. Le réactif de Brown est par exemple préparé par mélange de 150 millilitres d'eau de 200 millilitres d'éthanol et de 1,4 gramme de soude.

Pour préparer une couche de capture 26 en oyxnitrure de silicium fonctionnalisée par une fonction aldéïde, l'étape de réaction précédemment mentionnée comprend plusieurs sous-étapes.

A l'étape de réaction, il est mis en oeuvre une première sous-étape de réaction des fonctions Si-OH obtenues à l'étape de transformation avec un composé présentant les caractéristiques suivantes :

- porteur d'une fonction trialcoxysilane où chacun des groupes alkoxyle comprend indépendamment de un à trois atomes de carbone et
- porteur d'une fonction époxyde,

pour obtenir une couche en oxynitrure de silicium fonctionnalisée en surface avec des fonctions époxydes.

De préférence, ladite fonction trialcoxysilane est susceptible de réagir avec une fonction Si-OH.

A titre d'exemple, le composé utilisé lors de la première étape est de préférence le 5, 6 époxyhexyltriéthoxylane (EHTES).

A l'étape de réaction, il est aussi mis en oeuvre une deuxième sous-étape de transformation des fonctions époxydes présentes en surface de la couche d'oxynitrure de silicium obtenue à l'issue de la première sous-étape en fonction diols pour obtenir une couche en oxynitrure de silicium fonctionnalisée en surface avec des fonctions diols.

De préférence, la deuxième sous-étape est mise en oeuvre à l'aide d'un acide, par exemple de l'acide sulfurique.

A l'étape de réaction, il est également mis en oeuvre une troisième sous-étape d'oxydation des fonctions diols présentes en surface de la couche en oxynitrure de silicium obtenue à l'issue de la deuxième sous-étape en fonction aldéïde pour obtenir une couche en oxynitrure de silicium fonctionnalisée en surface avec des fonctions aldéïdes.

Par exemple, la troisième sous-étape est réalisée avec un oxydant. A titre d'illustration, l'oxydant est du périodate de sodium (NaIOa).

Chaque couche de capture 26 présente un troisième indice optique n26 de 1,5.

En outre, chaque couche de capture 26 présente une épaisseur de 100 nanomètres.

Cela permet de réaliser un guide d'onde optique dans chaque pilier 22, le guide d'onde optique comprenant un coeur optique avec la couche externe 24 et une gaine formée d'une part par la couche de capture 26 et d'autre part par la couche support 32 du pilier 22.

Le fonctionnement du dispositif 10 de la figure 3 est similaire au fonctionnement du dispositif de la figure 2.

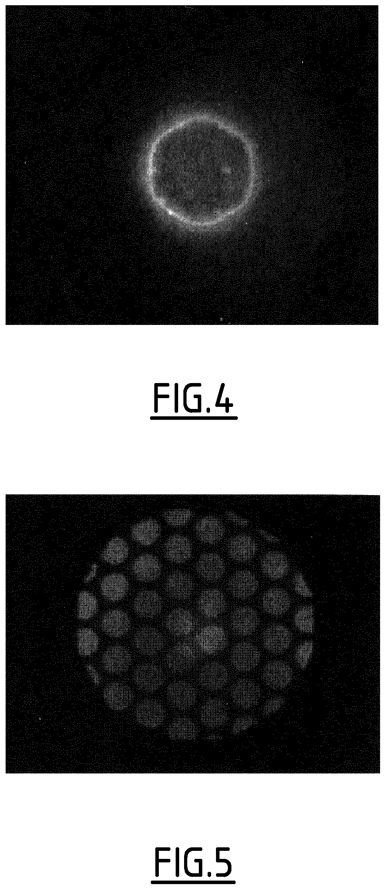

Il est toutefois, à noter que la courbure du guide d'ondes au niveau du haut des piliers 22 fait sortir les photons guidés au niveau du haut du pilier 22 (d'où la figure observée à la figure 4). En effet, les photons de fluorescence sont guidés par la couche externe 24. Du fait de la courbure de la couche externe 24 au sommet de chaque pilier, c'est-à-dire au niveau de l'extrémité libre, une grande partie des photons guidés ne suit pas le pourtour de cette extrémité libre et sortent du guide d'onde selon une direction sensiblement parallèle à l'axe longitudinal des piliers. Ils atteignent alors le photodétecteur, faisant face à l'extrémité libre du pilier.

Une expérience de fluorescence à l'aide d'un microscope en fluorescence (aussi appelé en épifluorescence) a été menée pour tester les performances d'un dispositif 10 obtenu selon un exemple de procédé de préparation d'une chambre 12 comprenant des piliers 22 avec une couche externe 24 en silicium et une couche de revêtement 26 en oxynitrure de silicium fonctionnalisée par des fonctions aldéïdes. Le dispositif 10 est similaire au dispositif 10 de la figure 3.

La préparation de la couche de revêtement 26 en oxynitrure de silicium fonctionnalisée par des fonctions aldéïdes a été réalisée selon le procédé décrit ensuite.

Un dépôt chimique en phase vapeur assisté par plasma d'une couche en oxynitrure de silicium sur la couche externe 24 a été effectué, ce dépôt étant suivi d'un traitement avec le réactif de Braun dans un bain d'ultrasons puis une étape de séchage.

La première sous-étape a consisté à faire réagir les fonctions Si-OH avec une solution 5 M de 5,6 époxyhexyltriéthoxylane (EHTES) et 0,2 M de triéthylamine dans le tiolène. Cette première sous-étape a également comporté un rinçage, un séchage puis un recuit de trois heures à 110°C.

La deuxième sous-étape a également consisté en une ouverture des fonctions époxydes en fonction diols par immersion dans une solution aqueuse d'acide sulfurique à 5%, un rinçage et un séchage.

La troisième sous-étape a comporté une oxydation des fonctions diols en fonction d'aldéïdes par immersion dans une solution aqueuse de NaLO$_4$, un rinçage, puis un séchage.

Pour l'application particulière de la chambre 12 à la détection d'ADN, 60 microlitres d'une solution de brin d'ADN dans un tampon de format de potassium 2 M ont été déposés la chambre 12. La solution a alors été évaporée.

La chambre 12 a alors été immergée dans une solution aqueuse de borohydrure de sodium (525 milligrammes de borohydrure de sodium pour 150 millilitres d'eau). Le borohydrure de sodium réduit les fonctions aldéïdes restantes en surface des piliers 22 (c'est-à-dire les fonctions aldéïdes n'ayant pas réagi avec les brins d'ADN lors de l'étape précédente). Cela permet que ces fonctions aldéïdes ne gênent pas les étapes suivantes. La chambre 12 a alors été rincée et séchée.

L'hybridation avec de l'ADN complémentaire porteur d'un fluorophore a alors été réalisée avec un Gene Frame. La chambre 12 a alors été rincée et séchée.

La figure 4 illustre la figure de fluorescence observée pour un pilier 22 du dispositif 10 ainsi obtenu tandis que la figure 5 illustre la figure de fluorescence observée pour un dispositif 10 similaire à celui de la figure 3 pour lequel les piliers 22 sont dépourvus de couche de capture 26. Les deux figures 4 et 5 sont représentées en utilisant la même échelle de sensibilité. Cela signifie, en particulier, qu'une zone plus blanche sur la figure 4 ou 5 correspond à une intensité lumineuse de fluorescence plus importante.

En comparant les figures 4 et 5, il apparaît que des surintensités lumineuses de 50% sont observables autour des piliers 22. Cela montre que le dispositif 10, présente un seuil de détection diminué, résultant en une sensibilité de détection améliorée.

Du fait de la couche externe 24, agissant en tant que guide d'onde, les photons de fluorescence sont canalisés par cette couche, puis, au niveau de l'extrémité libre d'un pilier, poursuivent leur trajet selon la direction selon laquelle s'étend le pilier, jusqu'au détecteur. Le signal de fluorescence apparaît alors sous la forme d'un anneau intense, qui représente la section de la couche externe 24 selon un plan parallèle au plan du photodétecteur.

Les modes de réalisation et les variantes décrits précédemment sont combinables pour générer, lorsque cela est possible, d'autres modes de réalisation de l'invention.

**Revendications**

**1.** Dispositif (10) d'analyse d'au moins un analyte d'un fluide, notamment de l'acide désoxyribonucléique, le dispositif (10) comprenant :

- une chambre (12) d'analyse, et
- une entrée (14) d'injection de fluide à analyser dans la chambre (12),

la chambre (12) comportant :

- au moins une paroi (18) délimitant un espace intérieur de circulation de fluide dans la chambre (12),
- au moins un pilier (22) s'étendant depuis la paroi (18),

le dispositif (10) étant **caractérisé en ce que** le ou chaque pilier (22) comporte :

- une âme (23) présentant un premier indice optique (n32),
- une couche externe (24) présentant un deuxième indice optique (n24), et
- une couche de revêtement (26) de la couche externe (24), dite couche de capture (26),

la couche de capture (26) étant une couche fonctionnalisée apte à capturer au moins un analyte du fluide, le deuxième indice optique (n24) de la couche externe (24) étant strictement supérieur au premier indice optique (n32) de l'âme (23) du pilier (22) considéré, la couche externe (24) de chaque pilier (22) étant entièrement recouverte par la couche de capture (26) du pilier (22), la couche externe (24) de chaque pilier (22) présentant une épaisseur strictement supérieure à 50 nanomètres et strictement inférieure à 1 micron.

2. Dispositif selon la revendication 1, dans lequel la paroi (18) est entièrement recouverte par la couche externe (24).

3. Dispositif selon la revendication 1 ou 2, dans lequel chaque pilier (22) présente une dimension selon la direction perpendiculaire à la paroi (18), ladite dimension étant strictement supérieure à 20 microns et strictement inférieure à 5 millimètres.

4. Dispositif selon l'une quelconque des revendications 1 à 3, dans lequel chaque pilier (22) présente la forme d'un cylindre présentant une base, la base étant, de préférence, un disque dont le diamètre est strictement supérieur à 1 micron et strictement inférieur à 100 microns.

5. Dispositif selon l'une quelconque des revendications 1 à 4, dans lequel la couche externe (24) de chaque pilier (22) présente une épaisseur strictement inférieure à 1 micron, de préférence strictement supérieure à 100 nanomètres et strictement inférieure à 300 nanomètres.

6. Dispositif selon l'une quelconque des revendications 1 à 5, dans lequel chaque pilier (22) comprend une extrémité libre (22L) et une extrémité (22F) fixée à la paroi (18), le dispositif (10) comprenant, en outre :

- une source de lumière propre à illuminer la paroi (18) pour injecter de la lumière dans chaque pilier (22) au niveau de l'extrémité (22F) fixée à la paroi (18) du pilier (22) considéré, et
- un capteur de lumière propre à capter de la lumière guidée par chaque pilier (22) vers l'extrémité libre (22L) du pilier (22) considéré.

7. Dispositif selon l'une quelconque des revendications 1 à 6, comprenant une pluralité de piliers (22), chaque pilier (22) s'étendant depuis la paroi (18) le long d'une direction (Z), les directions (Z) de chaque pilier (22) étant parallèles les unes avec les autres.

8. Dispositif selon l'une quelconque des revendications 1 à 7, dans lequel la couche de capture (26) présente un troisième indice optique (n26), le deuxième indice optique (n24) de la couche externe (24) étant strictement supérieur au troisième indice optique (n26) de la couche de capture (26) du pilier (22) considéré.

9. Procédé d'analyse d'un fluide comprenant au moins un analyte par un dispositif d'analyse (10) selon l'une quelconque des revendications 1 à 8, dans lequel chaque pilier (22) comprend une extrémité libre (22L) et une extrémité (22F) fixée à la paroi (18), le procédé d'analyse comprenant :

- une étape d'injection du fluide analysé dans la chambre (12),
- une étape d'illumination de la paroi (18) pour injecter de la lumière dans chaque pilier (22) au niveau de l'extrémité (22F) fixée à la paroi (18) du pilier (22) considéré, et
- une étape de collection de la lumière guidée par chaque pilier (22) vers l'extrémité libre (22L) du pilier (22) considéré.

**Patentansprüche**

1. Vorrichtung (10) zur Analyse von mindestens einem Analyten einer Flüssigkeit, insbesondere Desoxyribonukleinsäure, wobei die Vorrichtung (10) umfasst:

- eine Analysekammer (12) und
- einen Einlass (14) zum Einspritzen von zu analysierender Flüssigkeit in die Kammer (12), die Kammer (12) umfassend:

- mindestens eine Wand (18), die einen Innenraum für die Zirkulation von Flüssigkeiten in der Kammer (12) begrenzt,

- mindestens einen Pfeiler (22), der sich von der Wand (18) aus erstreckt,

wobei die Vorrichtung (10) **dadurch gekennzeichnet ist, dass** der oder jeder Pfeiler (22) umfasst:

- einen Kern (23) mit einem ersten optischen Index (n32),
- eine äußere Schicht (24) mit einem zweiten optischen Index (n24), und
- eine Deckschicht (26) der äußeren Schicht (24), die sogenannte Einfangschicht (26),

die Einfangschicht (26) eine funktionalisierte Schicht ist, die mindestens einen Analyten aus der Flüssigkeit einfangen kann, wobei der zweite optische Index (n24) der äußeren Schicht (24) strikt größer ist als der erste optische Index (n32) des Kerns (23) des betreffenden Pfeilers (22). Die äußere Schicht (24) jedes Pfeilers (22) ist vollständig von der Einfangschicht (26) des Pfeilers (22) bedeckt, wobei die äußere Schicht (24) jedes Pfeilers (22) eine Dicke aufweist, die strikt größer als 50 Nanometer und strikt kleiner als 1 Mikron ist.

2. Vorrichtung nach Anspruch 1, bei der die Wand (18) vollständig von der äußeren Schicht (24) bedeckt ist.

3. Vorrichtung nach Anspruch 1 oder 2, wobei jeder Pfeiler (22) eine Abmessung in der Richtung senkrecht zur Wand (18) aufweist, wobei die Abmessung strikt größer als 20 Mikron und strikt kleiner als 5 Millimeter ist.

4. Vorrichtung nach einem der Ansprüche 1 bis 3, wobei jeder Pfeiler (22) die Form eines Zylinders mit einer Basis aufweist, wobei die Basis vorzugsweise eine Scheibe ist, deren Durchmesser strikt größer als 1 Mikron und strikt kleiner als 100 Mikron ist.

5. Vorrichtung nach einem der Ansprüche 1 bis 4, bei der die äußere Schicht (24) jedes Pfeilers (22) eine Dicke von strikt unter 1 Mikron, vorzugsweise strikt über 100 Nanometer und strikt unter 300 Nanometer aufweist.

6. Vorrichtung nach einem der Ansprüche 1 bis 5, wobei jeder Pfeiler (22) ein freies Ende (22L) und ein an der Wand (18) befestigtes Ende (22F) aufweist, wobei die Vorrichtung (10) ferner umfasst:

- eine Lichtquelle, die geeignet ist, die Wand (18) zu beleuchten, um Licht in jeden Pfeiler (22) an dem Ende (22F) zu injizieren, das an der Wand (18) des betreffenden Pfeilers (22) befestigt ist, und

- einen Lichtsensor, der geeignet ist, Licht einzufangen, das von jedem Pfeiler (22) zum freien Ende (22L) des betreffenden Pfeilers (22) geleitet wird.

7. Vorrichtung nach einem der Ansprüche 1 bis 6, umfassend eine Vielzahl von Pfeilern (22), wobei sich jeder Pfeiler (22) von der Wand (18) entlang einer Richtung (Z) erstreckt, wobei die Richtungen (Z) jedes Pfeilers (22) parallel zueinander sind.

8. Vorrichtung nach einem der Ansprüche 1 bis 7, bei der die Einfangschicht (26) einen dritten optischen Index (n26) aufweist, wobei der zweite optische Index (n24) der äußeren Schicht (24) strikt größer ist als der dritte optische Index (n26) der Einfangschicht (26) des betrachteten Pfeilers (22).

9. Verfahren zum Analysieren einer Flüssigkeit, die mindestens einen Analyten enthält, durch eine Analysevorrichtung (10) nach einem der Ansprüche 1 bis 8, wobei jeder Pfeiler (22) ein freies Ende (22L) und ein an der Wand (18) befestigtes Ende (22F) umfasst, wobei das Analyseverfahren Folgendes umfasst:

- einen Schritt, bei dem die analysierte Flüssigkeit in die Kammer (12) injiziert wird,
- einen Schritt des Beleuchtens der Wand (18), um Licht in jeden Pfeiler (22) an dem Ende (22F) zu injizieren, das an der Wand (18) des betreffenden Pfeilers (22) befestigt ist, und
- einen Schritt des Sammelns von Licht, das von jedem Pfeiler (22) zum freien Ende (22L) des betrachteten Pfeilers (22) geleitet wird.

**Claims**

1. A device (10) for analysing at least one analyte of a fluid, in particular deoxyribonucleic acid, the device (10) comprising:

- an analysis chamber (12), and
- an inlet (14) for injecting fluid to be analysed into the chamber (12),
the chamber (12) comprising:

- at least one wall (18) delimiting an internal fluid circulation space in the chamber (12),
- at least one pillar (22) extending from the wall (18),

the device (10) being **characterised in that** the or each pillar (22) comprises:

- a core (23) with a first optical index (n32),
- an outer layer (24) with a second optical index (n24), and
- a coating layer (26) for the outer layer (24), known as the capture layer (26),

the capture layer (26) being a functionalised layer capable of capturing at least one analyte from the fluid, the second optical index (n24) of the outer layer (24) being strictly greater than the first optical index (n32) of the core (23) of the pillar (22) in question, the outer layer (24) of each pillar (22) being completely covered by the capture layer (26) of the pillar (22), the outer layer (24) of each pillar (22) having a thickness strictly greater than 50 nanometres and strictly less than 1 micron.

**2.** A device as claimed in claim 1, in which the wall (18) is completely covered by the outer layer (24).

**3.** A device according to claim 1 or 2, in which each pillar (22) has a dimension in the direction perpendicular to the wall (18), said dimension being strictly greater than 20 microns and strictly less than 5 millimetres.

**4.** A device according to any one of claims 1 to 3, in which each pillar (22) has the shape of a cylinder with a base, the base preferably being a disc whose diameter is strictly greater than 1 micron and strictly less than 100 microns.

**5.** A device according to any one of claims 1 to 4, in which the outer layer (24) of each pillar (22) has a thickness strictly less than 1 micron, preferably strictly greater than 100 nanometres and strictly less than 300 nanometres.

**6.** A device according to any one of claims 1 to 5, wherein each pillar (22) comprises a free end (22L) and an end (22F) fixed to the wall (18), the device (10) further comprising:

- a light source for illuminating the wall (18) to inject light into each pillar (22) at the end (22F) of the pillar (22) attached to the wall (18), and
- a light sensor capable of capturing light guided by each pillar (22) towards the free end (22L) of the pillar (22) in question.

**7.** A device according to any one of claims 1 to 6, comprising a plurality of pillars (22), each pillar (22) extending from the wall (18) along a direction (Z), the directions (Z) of each pillar (22) being parallel to one another.

**8.** A device according to any one of claims 1 to 7, in which the capture layer (26) has a third optical index (n26), the second optical index (n24) of the outer layer (24) being strictly greater than the third optical index (n26) of the capture layer (26) of the pillar (22) in question.

**9.** A method of analysis of a fluid comprising at least one analyte by an analysis device (10) according to any one of claims 1 to 8, wherein each pillar (22) comprises a free end (22L) and an end (22F) fixed to the wall (18), the method of analysis comprising:

- a step of injecting the fluid being analysed into the chamber (12),
- a step of illuminating the wall (18) to inject light into each pillar (22) at the end (22F) attached to the wall (18) of the pillar (22) in question, and
- a step of collecting the light guided by each pillar (22) towards the free end (22L) of the pillar (22) in question.

## FIG.1

## FIG.2

## FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012094642 A2
- US 2014099732 A2
- EP 2803410 A
- US 2010204057 A1
- US 2010111762 A
- US 2014045209 A1